# EUROPÄISCHE PATENTANMELDUNG

(11) **EP 4 653 858 A1**
(43) Veröffentlichungstag der Anmeldung: **26.11.2025**
(21) Anmeldenummer: 25177790.0
(22) Anmeldetag: 20.05.2025
(51) Int. Cl.: G01N 27/414

(54) **BIOSENSOR UND HERSTELLUNGSVERFAHREN**

(30) Priorität: 21.05.2024 DE 102024204672
(71) Anmelder: Forschungszentrum Jülich GmbH, 52428 Jülich (DE)
(72) Erfinder: VITUSEVYCH, Svitlana, 52353 Düren (DE); BOICHUK, Nazarii, 52428 Jülich (DE)
(74) Vertreter: Gille Hrabal Partnerschaftsgesellschaft mbB Patentanwälte

(57) **Zusammenfassung**

Die Erfindung betrifft einen Biosensor mit einem Feldeffekttransistor sowie ein Verfahren zum Herstellen eines Feldeffekttransistors für einen Biosensor. Ein Biosensor (10) umfasst einen Feldeffekttransistor (11) mit Source (13) und Drain (14). Der Feldeffekttransistor (11) weist eine Leiterstruktur (17) auf. Die Leiterstruktur (17) weist eine Verengung (18) auf. Eine speziell entwickelte Biosensor-Geometrie mit Verengung gewährleistet die Verstärkung der Empfindlichkeit von Biosensoren durch die Einfang-Emission zur/ von der Anlagestelle.

## Beschreibung

Die Erfindung betrifft einen Biosensor mit einem Feldeffekttransistor sowie ein Verfahren zum Herstellen eines Feldeffekttransistors für einen Biosensor.

In den letzten Jahren wurde der Entwicklung neuer Technologien und Konzepte für die Herstellung von biologischen Sensoren auf Nanodrahtbasis große Aufmerksamkeit geschenkt. Nanodrahttransistoren im Nanomaßstab zeigen stochastische Schalteffekte aufgrund von Einzelfallenphänomenen im Drainstrom, die digitale Signale repräsentieren, deren Parameter für Biosensoranwendungen genutzt werden können.

In den vergangenen Jahrzehnten wurden Vorrichtungen mit Einzelelektronen-/Loch-Tunnelung (engl.: *single electron*/ *hole tunneling;* SET) für eine Vielzahl von Anwendungen wie LSI-Schaltungen (Large-Scale-Integration) mit geringem Stromverbrauch, ultrasensible Elektrometer und messtechnische Standards eingehend untersucht. In den herkömmlichen metallbasierten SET-Vorrichtungen werden feste Tunnelbarrieren aus Metalloxid verwendet.

Die üblichen Leiterstrukturen oder Kanäle haben idealerweise eine Rechteckform, Trapezform oder Zylinder- bzw. Kreiszylinderform, die über die gesamte Länge konstant ist. Die bisherigen Biosensoren, die auf einem Feldeffekttransistor (FET) mit Nanodraht basieren, weisen allerdings fertigungstechnische Nachteile auf. Als Resultat tritt häufig eine Form mit regelmäßigen oder unregelmäßigen Schwankungen des Querschnitts auf, die auch als Bambusform bezeichnet wird. Diese führt zu Streuungen in Parametern des Nanodrahts und damit zu Beeinträchtigung bei der Messung. Ladungsträger haben eine reduzierte Beweglichkeit und Quanteneffekte können nicht genutzt werden. Die selektive Reaktion des Biosensors auf ein Zielmolekül ist derzeit nur durch Anlagerung mehrerer Schichten von Molekülen möglich.

Die Publikation DE 10 2013 018 850 A1 offenbart eine Vorrichtung zur Messung kleiner Spannungen und Potentiale an biologischen Proben. Die Vorrichtung umfasst einen FET mit Source, Drain und einem Gate, das mit der Probe in Kontakt steht und durch ein Gate-Dielektrikum vom leitenden Kanal des Feldeffekttransistors isoliert ist. Das Gate-Dielektrikum weist in seinem Inneren mindestens eine Anlagerstelle auf, die Ladungsträger aus dem Kanal einzufangen und umgekehrt an den Kanal abzugeben vermag. Die Publikation DE 10 2016 010 764 A1 offenbart eine nanostrukturierte Vorrichtung zur Messung kleiner Potentiale einer Probe mit einem FET mit einem Gate mit einer flüssigkeitsdichten Umrandung. Die Vorrichtung enthält ein Substrat und mindestens zwei sich kreuzende Nanodrähte aus halbleitendem Material mit jeweils einem Source- und Drain-Kontakt mit Mitteln zum Anlegen einer Spannung zwischen dem jeweiligen Source- und Drain-Kontakt. Die Publikation DE 10 2021 129 950 A1 betrifft eine Vorrichtung zur Messung von Potentialen an einer biologischen, chemischen oder anderen Probe, die ein Substrat und mindestens einen auf dem Substrat angeordneten Nanodraht aus einem halbleitenden Material aufweist. Der Nanodraht ist mit einer Beschichtungsanordnung versehen ist, welche eine Grundbeschichtung aus einem dielektrischen Material umfasst.

Die Aufgabe der Erfindung besteht darin, einen weiterentwickelten Biosensor sowie ein zugehöriges Herstellungsverfahren zur Verfügung zu stellen. Insbesondere sollen Nachteile des Standes der Technik zumindest teilweise behoben werden.

Die Aufgabe wird gelöst durch den Biosensor gemäß Anspruch 1 und das Verfahren gemäß dem nebengeordneten Anspruch. Vorteilhafte Ausgestaltungen sind in den Unteransprüchen angegeben.

Zur Lösung der Aufgabe dient ein Biosensor. Dieser umfasst einen Feldeffekttransistor mit Source und Drain. Der Feldeffekttransistor weist eine Leiterstruktur auf. Die Leiterstruktur weist eine Verengung auf.

Die Verengung schafft bzw. verbessert die Eigenschaften eines Nanodrahts und ermöglicht stochastische Schalteffekte aufgrund von Einzelfallenphänomenen (engl.: "single-trap phenomena") im Drainstrom. Diese repräsentieren digitale Signale. Die Schalteffekte bzw. deren Parameter können für Biosensoranwendungen genutzt werden. Es hat sich gezeigt, dass auf diese Weise die Empfindlichkeit im Vergleich zu größerflächigen Feldeffekttransistoren um 400% gesteigert werden kann.

Der Biosensor dient typischerweise der Messung einer elektrischen Spannung, eines Potentials und/oder einer anderen elektrischen Größe einer Probe. Die Probe ist insbesondere eine flüssige Probe. Der Biosensor kann für eine Messung ganz oder teilweise in die Probe eingetaucht werden bzw. mit der Probe benetzt werden. Der Biosensor ist bevorzugt geeignet, dynamische Prozesse, beispielsweise in biologischen Flüssigkeiten, auf direkt und/oder molekularer Ebene zu überwachen.

Die Leiterstruktur ist insbesondere zwischen dem Source und dem Drain angeordnet und/oder verbindet diese beiden Elemente. Die Leiterstruktur kann elektrische leitende oder halbleitende Eigenschaften aufweisen. Insbesondere besteht die Leiterstruktur aus einem halbleitenden Material. Insbesondere ist die Leiterstruktur als Nanodraht ausgebildet. Ein Nanodraht ist eine typischerweise langgestreckte Struktur mit einem Durchmesser bzw. einer Breite und Höhe von maximal 100 nm. Insbesondere beträgt die Höhe der Leiterstruktur maximal 50 nm.

Insbesondere ist die Leiterstruktur durch eine dielektrische Schicht entlang ihrer Oberfläche mindestens gegen die Probe elektrisch isoliert.

Die Verengung meint eine lokale Reduktion mindestens einer Abmessung der Leiterstruktur. Die Verengung umfasst typischerweise eine reduzierte Höhe der Leiterstruktur. Die Verengung stellt typischerweise ein Minimum der Querschnittsfläche der Leiterstruktur bereit. Die Verengung kann eine reduzierte Breite der Leiterstruktur umfassen. Die Leiterstruktur weist in Bereichen abseits der Verengung typischerweise einen zumindest im Wesentlichen konstanten Querschnitt auf. Die Leiterstruktur kann vor und nach der Verengung denselben Querschnitt aufweisen. Die Verengung ist insbesondere nachträglich in die Leiterstruktur eingebracht worden.

Der Feldeffekttransistor ist insbesondere ein Flüssig-Gate-FET. Für flüssige biologische Proben ist häufig eine Beaufschlagung des Gates und der in dem Gate angeordneten flüssigen Probe mit einer Spannung notwendig, damit ein Ladungsaustausch zwischen der Anlagerstelle und dem durch den Nanodraht fließenden Stromfluss stattfindet bzw. mit erhöhter Frequenz stattfindet. Die Kombination von Gate, insbesondere einer Elektrode, durch welche eine Spannung an die Flüssigkeit angelegt werden kann, und der Flüssigkeit kann auch als "liquid gate" bezeichnet werden. Das Gate des FET steht in diesem Fall mit der Probe in Kontakt und/oder ist durch ein Gate-Dielektrikum vom leitenden Kanal des Feldeffekttransistors isoliert. Der Gate kann flüssigkeitsdichte Umrandung aufweisen. Der FET kann den Gate enthalten.

Der Drain kann einen Drain-Kontakt aufweisen. Der Source kann einen Source-Kontakt aufweisen. Kontakte dienen der elektrischen Kontaktierung.

Insbesondere enthält der Biosensor kein Metall-Gate. Insbesondere enthält der Biosensor kein Polysilizium-Gate. Insbesondere enthält der Biosensor kein Nanogate.

In einer Ausführungsform ist der Biosensor ein Quanten-Biosensor. In einer Ausführungsform ist der Biosensor ein CMOS-Biosensor (engl.; complementary metaloxide-semiconductor; keine gängige deutsche Übersetzung vorhanden, etwa "komplementärer oder sich ergänzender Metall-Oxid-Halbleiter"). Hierbei werden sowohl p-Kanal- MOSFETS als auch n-Kanal-MOSFETS auf einem gemeinsamen Substrat verwendet.

Insbesondere ist der Feldeffekttransistor ein Halbleiter-Feldeffekttransistor und/oder eine Vorrichtung mit Einzelelektronen-/Loch-Tunnelung (engl.: *single electron*/ *hole tunneling;* SET). Insbesondere umfasst der Biosensor ferner Mittel zum Anlegen einer Spannung zwischen Source und Drain und/oder Mittel zur Beaufschlagung des Gates mit einer Biasspannung.

In einer Ausgestaltung weist die Verengung an einer schmalsten Stelle eine Erstreckung von höchstens 50 nm, insbesondere höchstens 30 nm und bevorzugt höchstens 20 nm auf. Die minimale Erstreckung entspricht einer Einzellage des jeweiligen Stoffes, insbesondere Silizium.

Die Erstreckung wird typischerweise quer zur Längserstreckung und/oder zur Verbindungsrichtung zwischen Source und Drain gemessen. Die Erstreckung entspricht Insbesondere einer Höhe der Leiterstruktur bzw. des Nanodrahts.

Es hat sich gezeigt, dass eine derart kleine Ausführung eine besonders hohe Empfindlichkeit gegenüber Änderungen des pH-Werts, der Konzentration bzw. Ionenstärke von Lösungen und der molekularen Ladung in Bioflüssigkeiten ermöglicht. Demnach kann mit einem solchen Biosensor eine besonders hohe Messgenauigkeit erhalten werden. So können Quantisierungseffekte sowie eine hohe Mobilität besonders effektiv genutzt werden. Die Mobilität im Nanobereich ist höher als die "bulk mobility", also die Mobilität im Massenmaterial in größeren Vorrichtungen. Für den Quantisierungseffekt werden keine zusätzlichen Gates benötigt. Dies erleichtert den Herstellungsprozess deutlich. Zudem wird durch den Quantisierungseffekt im Vergleich zu kT = 25 meV eine sehr gute Trennung der Energieniveaus der Struktur ermöglicht.

Die Erstreckung der Verengung kann gemessen werden mit einem Rasterelektronenmikroskop, beispielsweise einem FEI Magellan.

In der Richtung, die senkrecht zur Richtung der schmalsten Erstreckung ausgerichtet ist, weist die Verengung insbesondere eine Erstreckung von höchstens 100 nm, insbesondere höchstens 75 nm, in einer Ausführungsform höchstens 50 nm, bevorzugt höchstens 30 nm und besonders bevorzugt höchstens 20 nm auf. Diese Erstreckung kann der Breite der Leiterstruktur im Bereich der Verengung entsprechen.

In einer Ausgestaltung weist die Verengung an einer schmalsten Stelle eine Erstreckung von höchstens 15 nm oder 10 nm auf.

Je kleiner die Größe der Verengung ist, desto größer ist das zufällige Telegraphiesignal (random telegraph signal; RTS), das für effektive Biosensoranwendungen erzielt werden kann. Es hat sich gezeigt, dass bei Strukturen im Größenbereich von oder unterhalb von 10 nm eine Erhöhung der Sensitivität um den Faktor 10 in Vergleich zu herkömmlichen Biosensoren erreicht werden kann. Zudem kann eine besonders schnelle Reaktion erreicht werden, sodass eine besonders schnelle Detektion möglich ist.

Bei besonders kleinen Verengungen kann ein nahezu ballistischer Elektronentransport erreicht werden, bei dem kein oder nahezu horizontaler Anteil der Ausbreitung besteht. Dies ermöglicht einen Quantisierungseffekt bei Raumtemperatur.

Zudem wird durch kleine Geometrie eine Stufenbildung in der I-V-Charakteristik ermöglicht. Die Stufen können eine annähernd vertikale Form aufweisen. Dies führt dazu, dass eine besonders hohe Empfindlichkeit erreicht werden kann.

In einer Ausgestaltung ist die Verengung durch schräge Seitenflächen gebildet. Mit anderen Worten grenzen an die engste Stelle schräge Seitenflächen an. Die Seitenflächen sind typischerweise in der Draufsicht und/oder in den Seitenansicht schräg. Schräg meint eine winklige Ausrichtung in Bezug zur Längserstreckung der Leiterstruktur und/oder zur Verbindungsrichtung zwischen Source und Drain. Auf diese Weise wird ein Winkel ungleich 0 zur Oberfläche der benachbarten Leiterstruktur ausgebildet. Insbesondere sind die schrägen Seitenflächen im Wesentlichen eben.

Eine solche Verengung kann einfach hergestellt werden. In einer Ausführungsform ist die Verengung symmetrisch.

In einer Ausgestaltung schließt jede der Seitenflächen einen Winkel von mindestens 40° insbesondere mindestens 50°mit und/oder höchstens 70°, insbesondere höchstens 60°, mit einer Oberfläche der der Verengung benachbarten Leiterstruktur ein.

Diese Winkel ermöglichen die Konzentration der zu detektierenden Moleküle im Bereich der Verengung. Somit kann eine besonders hohe Sensitivität erreicht werden. Zudem wird ein verbessertes Verhältnis zwischen Kanalwiderstand und Kontaktwiderständen ermöglicht. Die genannten Winkel können zudem besonders gut durch das erfindungsgemäße Verfahren hergestellt werden.

In einer Ausgestaltung ist die Verengung im Querschnitt V-förmig. Es ist nicht ausgeschlossen, dass die Verengung \_/-förmig ist, also V-förmig mit einem Zwischenstück, wobei das Zwischenstück insbesondere im Wesentlichen parallel zu einer Oberfläche des Nanodrahts ausgerichtet ist.

Es hat sich gezeigt, dass diese Geometrie eine besonders hohe Stromdichte ermöglicht. Die Nutzung der Einzelfallenphänomens, das zu periodischen, stochastisch verteilten, digitalen Werten führt, ist besonders effektiv möglich. Es werden hoch aufgelöste Peaks und eine sehr sensitive Detektion bis hin zur Detektion einzelner Moleküle ermöglicht, mit charakteristischen Zeitkonstanten zur Detektion dynamischer Prozesse auf einzelmolekularer Ebene. Es hat sich gezeigt, dass einzelne Moleküle sich ggf. schwerkraftbedingt zum Boden der V-förmigen Verengung bewegen. Es wird durch die V-Form ein klar definierter Ort bereitgestellt. Es hat sich zudem herausgestellt, dass diese Geometrie besonders sensitiv für Änderungen des Oberflächenpotentials ist.

Die V-Form ermöglicht zudem durch die Bildung von zwei Doppelschichten eine Verdopplung der effektiven Detektionsschicht in Flüssigkeiten (Debye-Länge).

In einer Ausgestaltung ist ein Abstand zwischen der Verengung und dem Drain geringer ist als ein Abstand zwischen der Verengung und dem Source.

Das elektrische Feld ist nahe dem Drain am stärksten. Aus diesem Grund wird die Verengung vorteilhaft näher am Drain angeordnet. Allerdings ist ein gewisser Abstand zum Drain dennoch vorteilhaft, damit es während der üblicherweise anschließenden Herstellung des Drain-Kontakts nicht zu einer Beschädigung der mechanisch anfälligen Verengung kommt.

Für die Bestimmung der Abstände ist bei der Verengung die Stelle mit minimalem Querschnitt maßgeblich. Ist die Stelle mit minimalem Querschnitt ein Bereich mit konstantem Querschnitt, ist die Mitte davon maßgeblich. Bei Source und Drain ist die Stelle maßgeblich, an der die Leiterstruktur Source bzw. Drain kontaktiert.

In einer Ausführungsform beträgt der Abstand zwischen dem Drain und der Verengung mehr als 20%, insbesondere mehr als 25%, bevorzugt mehr als 30% und/oder weniger als 45%, insbesondere weniger als 40%, bevorzugt weniger als 35% des Abstandes zwischen Drain und Source. Der Abstand zwischen Source und der Verengung ist dann die Differenz zu 1. Dieser Abstand hat sich als Optimum zwischen der Stabilität bei der Herstellung und der Effektivität aufgrund des elektrischen Feldes herausgestellt.

In einer Ausgestaltung ist ein Abstand zwischen dem Source und der Verengung kleiner ist als 150nm. In einer Ausgestaltung ist ein Abstand zwischen dem Drain und der Verengung kleiner ist als 30nm.

Die Herstellung ohmscher Kontakte durch Ionenimplantation und anschließendes Hochtemperaturglühen führt in herkömmlichen FETs bzw. Biosensoren zu einer verringerten Ladungsträgermobilität im Nanodraht. Diese ist gegenüber der Bulk-Mobilität im Siliziummaterial (Massenmaterial) um etwa den Faktor 3 verringert. Durch einen größeren Abstand zwischen dem Source-Kontakt bzw. dem Drain-Kontakt und der Leiterstruktur von 1 µm bis 2 µm kann dem entgegengewirkt werden, da so eine geringere Beeinflussung der maßgeblichen Stelle im Bereich der Verengung erfolgt. Auf diese Weise kann eine erhöhte Mobilität erreicht werden.

In einer Ausgestaltung umfasst die Leiterstruktur Silizium oder ist aus Silizium hergestellt. Die Leiterstruktur mit oder aus Silizium erlaubt eine besonders einfache und reproduzierbare Herstellung der Verengung, beispielsweise durch nasschemisches Ätzen. Zudem kann die Herstellung skaliert werden. Beispielsweise können auf diese Weise Quanten-SET-Biosensoren hergestellt werden. Silizium hat sich im Nanomaßstab als sehr stabil erwiesen.

Insbesondere umfasst der Feldeffekttransistor ein Substrat, vorzugsweise Silizium. Source und/oder Drain können auf dem Substrat angeordnet sein und/oder aus dem Substrat hergestellt sein.

In Halbleiter-Vorrichtungen, z. B. in GaAs-basierten SET-Vorrichtungen, ist die Verwendung von elektrostatischen Potenzialbarrieren durch Gate-Elektroden möglich geworden. Diese Barrieren sind elektrisch abstimmbar, was die Möglichkeit schafft, die Tunnel-Leitfähigkeit über einen weiten Bereich zu steuern, und damit den Freiheitsgrad bereitstellt, die Coulomb-Blockade (CB) und/oder die Konfiguration von Ladungsinseln flexibler zu steuern. Der Feldeffekttransistor kann eine Halbleitervorrichtung z. B. basierend auf GaAs sein.

Es hat sich gezeigt, dass der Biosensor bei hohen Temperaturen, d. h. bei Raumtemperatur, funktioniert. In Verbindung mit einer atomar flachen Verengung mit einer Strukturgröße von unter 20 nm oder unter 10 nm kann eine besonders starke Steigerung der Mobilität in Richtung der Bulk-Mobilität des Siliziummaterials ermöglicht werden.

In einer Ausgestaltung ist der Feldeffekttransistor als Silicon-on-Insulator ausgestaltet. Silicon-on-Insulator (keine gängige deutsche Übersetzung vorhanden, etwa "Silizium auf einem Isolator") bezeichnet einen Isolierschicht-Feldeffekttransistor, bei dem eine insbesondere dünne Siliziumschicht durch eine isolierende Schicht wie z. B. Buried Oxide, BOX (keine gängige deutsche Übersetzung vorhanden, etwa "vergrabenes Oxid") vom Substrat, beispielsweise aus Silizium, getrennt ist. Dies ermöglicht kürzere Schaltzeiten und eine geringere Leistungsaufnahme und reduziert Leckströme. Zudem weist ein solcher FET eine verringerte Empfindlichkeit gegenüber ionisierender Strahlung auf.

In einer Ausgestaltung ist der Source und/oder der Drain mit einer elektrisch isolierenden Schicht bedeckt. Auf diese Weise kann ein Kurzschluss durch eine zu untersuchende Flüssigkeit verhindert werden. Die elektrisch isolierende Schicht ist insbesondere eine Polymerschicht.

In einer Ausgestaltung ist die Leiterstruktur mit SiO₂ und/oder Al₂O₃ bedeckt. Insbesondere wird eine Deckschicht aus SiO₂ und/oder Al₂O₃ vorgesehen, die so ausgebildet ist, dass die Leiterstruktur zumindest nach oben hin vollständig abgedeckt ist. SiO₂ als native Schicht ist annähernd frei von Defekten und kann die Leiterstruktur somit gut begrenzen. Allerdings ist SiO₂ porös. Somit können Ionen aus Flüssigkeiten eindringen und die Parameter verändern. Das Vorsehen einer zusätzlichen Al₂O₃-Schicht führt zu einer dichten Schicht, die einen stabilen Betrieb gewährleistet und das Eindringen von Ionen nahezu vollständig verhindert.

SiO₂ wird üblicherweise durch thermische Oxidation hergestellt. Bei der trockenen Oxidation, die oberhalb von 800°C erfolgt, erfolgt ein langsames Wachstum bei einer sehr guten Qualität der Schicht. Bei der nassen Oxidation mit Wasserdampf erfolgt ein sehr viel schnelleres Wachstum mit vergleichsweise geringerer Qualität.

Alternativ ist eine Deckschicht aus oder mit einem anderen Dielektrikum vorgesehen.

Insbesondere ist der Feldeffekttransistor ein Feldeffekttransistor mit isolierter Gate-Elektrode.

Die Deckschicht kann als Umrandung ausgeführt sein, um die Leiterstruktur vollständig zu umranden bzw. in alle Richtungen, in denen die Leiterstruktur freiliegt, zu isolieren. Sind zudem Mittel zur Beaufschlagung einer Flüssigkeit mit Spannung innerhalb dieser Umrandung bereitgestellt, die zum Beispiel eine Elektrode umfassen können, welche in eine zu untersuchende Flüssigkeit eingetaucht werden kann und mit einer Spannungsquelle verbunden ist, wird so ein "liquid gate" gebildet.

Der erfindungsgemäße Biosensor kann neue charakteristische Zeitparameter als Analysewerkzeug nutzen. Die optimierte Struktur ist besonders geeignet für eine industrielle Herstellung. Der Feldeffekttransistor ist insbesondere ein Nano-Feldeffekttransistor, also ein Nanotechnologie implementierender und/oder mittels Nanotechnologie hergestellter FET und/oder ein FET mit Abmessungen im Nanometerbereich. Der erfindungsgemäße Biosensor macht die bisherige Kalibrierung und Anpassung überflüssig, da sich die Eigenschaften des Feldeffekttransistors über die Zeit nicht ändern.

In einer Ausgestaltung sind umfasst der Biosensor mehrere Verengungen. Insbesondere sind diese entlang der Länge der Leiterstruktur hintereinander angeordnet.

Ein unabhängiger Aspekt der Erfindung ist ein Feldeffekttransistor, insbesondere für einen erfindungsgemäßen Biosensor. Der Feldeffekttransistor hat Source und Drain. Der Feldeffekttransistor weist eine Leiterstruktur auf. Die Leiterstruktur weist eine Verengung auf. Alle Merkmale, Ausgestaltungen und Vorteile der eingangs beschriebenen Biosensors und seiner Komponenten gelten ebenso für den Feldeffekttransistor und umgekehrt.

Ein weiterer Aspekt der Erfindung ist ein Verfahren zum Herstellen eines Feldeffekttransistors für einen erfindungsgemäßen Biosensor. Der FET umfasst insbesondere Source und Drain, weist eine Leiterstruktur auf und insbesondere weist die Leiterstruktur eine Verengung auf. Das Verfahren umfasst Bereitstellen einer Leiterstruktur, insbesondere eines Nanodrahts. Das Verfahren umfasst ferner die Herstellung einer Verengung in der Leiterstruktur. Alle Merkmale, Ausgestaltungen und Vorteile der eingangs beschriebenen Biosensors und seiner Komponenten gelten ebenso für das Verfahren und umgekehrt.

Insbesondere wird die Leiterstruktur und/oder die Verengung mittels Elektronenstrahllithographie (ESL) und/oder Nanoprägelithographie (Engl.: *nanoimprint lithography)* hergestellt, ggf. unter Verwendung einer geeigneten und/oder speziell entwickelten Maske. Insbesondere umfasst das Verfahren die Bereitstellung von Source und/oder Drain.

In einer Ausgestaltung wird zur Herstellung der Verengung mindestens ein Ätzverfahren durchgeführt, insbesondere nasschemisches Ätzen und/oder Trockenätzen.

Insbesondere wird die Leiterstruktur und/oder die Verengung durch nasschemisches Ätzen hergestellt. Dies ermöglicht eine besonders glatte Oberfläche, die Streuung effektiv verhindert und so die Leitfähigkeit und das Signal-Rausch-Verhältnis erhöht. Zudem wird die Transkonduktanz verbessert.

Insbesondere wird auf die Leiterstruktur eine Maske aufgetragen. Die Maske ist typischerweise zur Ausbildung einer V-förmigen Verengung ausgebildet. Die Maske kann eine Öffnung bzw. einen Schlitz umfassen. Die Öffnungs- bzw. Schlitzweite ist insbesondere an die Schichtdicke, also die Höhe der Leiterstruktur, angepasst. Typischerweise erfolgt ein Ätzen, insbesondere nasschemisches Ätzen. Anschließend kann eine weitere Maske aufgetragen werden. Die Maske kann eine Öffnung bzw. einen Schlitz umfassen. Die Öffnungs- bzw. Schlitzweite ist insbesondere an die Schichtdicke, also die Höhe der Leiterstruktur, angepasst. Die Öffnung bzw. der Schlitz kann eine solche Weite haben, dass die Breite bei bekanntem Ätzwinkel im unteren Bereich ca. 20 nm beträgt. Typischerweise erfolgt ein weiters Ätzen, insbesondere nasschemisches Ätzen. Es können insbesondere anschließend ohmsche Kontakte hergestellt werden, insbesondere mittels Ionenimplantation. Es kann insbesondere anschließend eine dielektrische Schicht aufgetragen werden. Es kann insbesondere anschließend eine Passivierung von Kontakten, insbesondere aller Kontakte, erfolgen. Anschließend kann eine Messung erfolgen, insbesondere in einer Flüssigkeit.

Als Trockenätzverfahren kann beispielsweise Plasma-unterstütztes Ätzen verwendet werden (engl.: reactive-ion etching, RIE).

Es können zur Herstellung des Biosensors und/oder des Feldeffekttransistors mehrere Verfahren verwendet werden. Es kann beispielsweise eine Reduktion der Dicke der Leiterstruktur durch nasschemisches Ätzen erfolgen. Alternativ oder ergänzend kann eine Reduktion der Breite der Leiterstruktur durch Trockenätzen erfolgen. Es können mehrere Wiederholungen eines nasschemischen Ätzens und/oder eines Trockenätzens erfolgen

Es kann bei Wahl einer geeigneten Maske sowie geeigneter Parameter eine sehr dünne Silizium-Struktur bis hin zur einlagigen Schicht und/oder Silicen-Struktur erreicht werden.

In einer Ausgestaltung umfasst das Verfahren ferner ein Auftragen einer Deckschicht, die Al₂O₃ umfasst, insbesondere mittels Atomlagenabscheidung.

Die Schicht wird insbesondere auf die Leiterstruktur und/oder auf eine Schicht aus Silizium aufgetragen. Das Auftragen der Deckschicht erfolgt insbesondere nach der Herstellung der Verengung. Die Atomlagenabscheidung wird bevorzugt bei einer Temperatur unterhalb von 150 °C durchgeführt. Die Deckschicht kann zudem SiO₂ umfassen. Eine Deckschicht umfassend SiO₂ kann durch thermisches Wachstum hergestellt werden. Alternativ wird eine Deckschicht aus oder mit einem anderen Dielektrikum hergestellt.

Es hat sich herausgestellt, dass eine solche Deckschicht mittels Atomlagenabscheidung (engl.: atomic layer deposition; ALD) besonders dicht und zudem glatt auf die bestehende Struktur aufgetragen werden kann.

In einer Ausgestaltung umfasst der Verfahren ferner ein Herstellen von ohmschen Kontakten und insbesondere eine Passivierung der ohmschen Kontakte. Die Passivierung erfolgt insbesondere durch Auftragen einer elektrisch isolierenden Schicht auf einen jeweiligen elektrischen Kontakt.

### Ausführungsbeispiel

Es kann ein 100 mm-SOI-Wafer mit z. B. 50 nm Si auf 145 nm BOX/Si-Substrat bereitgestellt werden.

In einem Schritt 1 kann eine RCA-Reinigung erfolgen. Dazu kann ein Reinigen mit einer Mischung aus H₂O₂ und H₂SO₄ (engl.: "piranha solution"), etwa im Verhältnis 2:1, und/oder für 10 min erfolgen. Es kann ein Spülen mit deionisiertem Wasser erfolgen. Es kann ein Reinigen erfolgen, z. B. mit HF, z. B. 1%iger Lösung und/oder für 10 s. Es kann ein Spülen mit deionisiertem Wasser erfolgen.

Es kann eine Standard-Reinigung 1 erfolgen. Dazu kann ein Reinigen mit NH₄OH, H₂O₂ und deionisiertem Wasser erfolgen, z. B. im Verhältnis 1:4:20, und/oder für 10 min. Es kann ein Spülen mit deionisiertem Wasser erfolgen. Es kann ein Reinigen erfolgen, z. B. mit HF, z. B. 1%iger Lösung und/oder für 10 s. Es kann ein Spülen mit deionisiertem Wasser erfolgen.

Es kann eine Standard-Reinigung 2 erfolgen. Dazu kann ein Reinigen mit HCl, deionisiertem Wasser und H₂O₂ erfolgen, z. B. im Verhältnis 1:20:1, und/oder für 10 min. Es kann ein Spülen mit deionisiertem Wasser erfolgen. Es kann ein Reinigen erfolgen, z. B. mit HF, z. B. 1%iger Lösung und/oder für 10 s. Es kann ein Spülen mit deionisiertem Wasser erfolgen. Es kann ein Trocknen mit N₂ erfolgen.

In einem Schritt 2 kann eine Bildung einer Maske oder Hartmaske erfolgen, etwa aus oder mit Oxford PECVD 20 nm. Es kann eine PECVD oder thermische Oxidation erfolgen, beispielsweise 40 min und/oder bei 1000°C und/oder für 20 nm SiO₂.

In einem Schritt 3 können Ausrichtungsmarkierungen definiert werden. Es kann ein Photoresist aufgetragen werden, etwa AZ nLof 2020. Es kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AZ nLof 2020 verwendet werden, beispielsweise bei 4000 RPM und/oder mit Vorbeschleunigung. Es kann ein Weichbacken (engl.: "softbake") erfolgen, etwa für 1 min und/oder bei 110°C. Es kann eine Exposition und/oder Belichtung erfolgen, z. B. mit einem SÜSS MA8/BA8 und/oder bei 40 mJ*cm⁻² und/oder in einem Kontaktmodus. Es kann ein Nach-Belichtungs-Backen (engl.: "post-exposure bake") erfolgen, etwa für 1 min und/oder bei 110 °C. Es kann ein Entwickeln erfolgen, etwa unter Verwendung von AZ MIF 326 und/oder für 45 s. Es kann ein Spülen mit deionisiertem Wasser erfolgen. Es kann ein Trocknen mit N₂ erfolgen.

Es kann ein Plasma-unterstütztes Ätzen erfolgen, etwa um Markierungen zu ätzen. Es kann O₂ verwendet werden, etwa 30 sccm und/oder für 3 s und/oder bei Hochfrequenzleistung. Alternativ oder ergänzend kann CHF₃/Ar verwendet werden, etwa 50/50 sccm und/oder 40 s und/oder bei Hochfrequenzleistung. Alternativ oder ergänzend kann SF₆/O₂ verwendet werden, etwa 100/8 sccm und/oder 21 s und/oder bei Hochfrequenzleistung. Alternativ oder ergänzend kann CHF₃/Ar verwendet werden, etwa 50/50 sccm und/oder 5 min und/oder bei Hochfrequenzleistung. Alternativ oder ergänzend kann O₂ verwendet werden, etwa 30 sccm und/oder für 3 min und/oder bei Hochfrequenzleistung und/oder Leistung des induktiv gekoppelten Plasmas (engl.: inductively coupled plasma, ICP). Es kann eine Kaskadenreinigung erfolgen, etwa mit Aceton, etwa für 2 min, und/oder mit Isopropanol, etwa für 1 min. Es kann ein Trocknen mit N₂ erfolgen.

In einem Schritt 4 kann eine Lithographie, beispielsweise eine Elektronenstrahllithographie erfolgen, etwa zur Herstellung einer insbesondere etwa V-förmigen Verengung. Es kann ein Photoresist aufgetragen werden, etwa ein PMMA-Elektronenstrahl-Photoresist, etwa AR 649.04 K. Zu diesem Zweck kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AR 649.04 K verwendet werden, beispielsweise bei 4000 RPM und/oder mit Vorbeschleunigung. Es kann ein Weichbacken (engl.: "softbake") erfolgen, etwa für 1 min und/oder bei 110°C.

Es kann ein Elektronenstrahlschreiben bzw. die Elektronenstrahllithographie erfolgen, etwa bei 270 µC * cm⁻² und/oder mit einer Energie von ca. 50 keV und/oder in 5 nm-Schritten und/oder bei 500 pA. Es kann ein Entwickeln erfolgen, etwa unter Verwendung von AR-P 600-55 und/oder für 1 min. Es kann ein Spülen erfolgen, etwa mit Isopropanol, etwa für 1 min. Es kann ein Trocknen mit N₂ erfolgen.

Es kann ein Plasma-unterstütztes Ätzen erfolgen. Es kann O₂ verwendet werden, etwa 30 sccm und/oder für 3 s und/oder bei Hochfrequenzleistung. Alternativ oder ergänzend kann CHF₃/Ar verwendet werden, etwa 50/50 sccm und/oder 40 s und/oder bei Hochfrequenzleistung. Alternativ oder ergänzend kann O₂ verwendet werden, etwa 30 sccm und/oder für 2 min und/oder bei Hochfrequenzleistung und/oder Leistung des induktiv gekoppelten Plasmas (engl.: inductively coupled plasma, ICP).

In einem Schritt 5 kann eine Mesa-Struktur-Definition erfolgen. Es kann eine Kaskadenreinigung erfolgen, etwa mit Aceton, etwa für 2 min, und/oder mit Isopropanol, etwa für 1 min. Es kann ein Trocknen mit N₂ erfolgen. Es kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AZ 5214E verwendet werden, beispielsweise bei 4000 RPM und/oder mit Vorbeschleunigung. Es kann ein Weichbacken (engl.: "softbake") erfolgen, etwa für 1 min und/oder bei 110°C. Es kann eine Exposition und/oder Belichtung erfolgen, z. B. mit einem SÜSS MA8/BA8 und/oder bei 75 mJ*cm⁻² und/oder in einem Kontaktmodus.

Es kann ein Entwickeln erfolgen, etwa unter Verwendung von AZ MIF 326 und/oder für 45 s. Es kann ein Spülen mit deionisiertem Wasser erfolgen. Es kann ein Trocknen mit N₂ erfolgen.

Es kann ein Plasma-unterstütztes Ätzen erfolgen. Es kann O₂ verwendet werden, etwa 30 sccm und/oder für 3 s und/oder bei Hochfrequenzleistung. Alternativ oder ergänzend kann CHF₃/Ar verwendet werden, etwa 50/50 sccm und/oder 40 s und/oder bei Hochfrequenzleistung. Alternativ oder ergänzend kann O₂ verwendet werden, etwa 30 sccm und/oder für 2 min und/oder bei Hochfrequenzleistung und/oder Leistung des induktiv gekoppelten Plasmas.

In einem Schritt 6 kann ein Nassätzen erfolgen, etwa zur Herstellung einer insbesondere etwa V-förmigen Verengung. Natives Oxid kann entfernt werden, etwa mittels HF, z. B. 1% und/oder für 10 s. Es kann gespült werden, etwa mit entionisiertem Wasser. Es kann das eigentlichen Nassätzen erfolgen, etwa ein anisotropes Nassätzen. Beispielsweise kann TMAH (Tetra-methyl-Ammonium-Hydroxid) verwendet werden, z. B. 25% und/oder bei 60°C und/oder mit einer Ätzrate von 90 nm/min. Es kann ein Spülen erfolgen, etwa mit deionisiertem Wasser. Es kann ein Trocknen erfolgen, etwa mit N₂.

In einem Schritt 7 kann eine Lithographie, beispielsweise eine Elektronenstrahllithographie erfolgen, etwa zur Herstellung einer insbesondere etwa V-förmigen Verengung. Es kann ein Photoresist aufgetragen werden, etwa ein PMMA-Elektronenstrahl-Photoresist, etwa AR 649.04 K. Zu diese Zweckk kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AR 649.04 K verwendet werden, beispielsweise bei 4000 RPM und/oder mit Vorbeschleunigung. Es kann ein Weichbacken (engl.: "softbake") erfolgen, etwa für 1 min und/oder bei 110°C.

Es kann ein Elektronenstrahlschreiben bzw. die Elektronenstrahllithographie erfolgen, etwa bei 270 µC * cm⁻² und/oder mit einer Energie von ca. 50 keV und/oder in 5 nm-Schritten und/oder bei 500 pA. Es kann ein Entwickeln erfolgen, etwa unter Verwendung von AR-P 600-55 und/oder für 1 min. Es kann ein Spülen erfolgen, etwa mit Isopropanol, etwa für 1 min. Es kann ein Trocknen mit N₂ erfolgen.

Es kann ein Plasma-unterstütztes Ätzen erfolgen. Es kann O₂ verwendet werden, etwa 30 sccm und/oder für 3 s und/oder bei Hochfrequenzleistung. Alternativ oder ergänzend kann SF₆/O₂ verwendet werden, etwa 100/8 sccm und/oder 15 s und/oder bei Hochfrequenzleistung. Alternativ oder ergänzend kann O₂ verwendet werden, etwa 30 sccm und/oder für 2 min und/oder bei Hochfrequenzleistung und/oder Leistung des induktiv gekoppelten Plasmas. Die Breite der Verengung beträgt nach dem Plasmaunterstützten Ätzen insbesondere weniger als 100nm

In einem Schritt 8 kann eine schützende Oxidation bzw. die Herstellung einer Oxidationsschutzschicht erfolgen. Es kann eine Mischung aus H₂O₂ und H₂SO₄ (engl.: "piranha solution"), etwa im Verhältnis 2:1, und/oder für 10 min verwendet werden. Es kann ein Spülen mit deionisiertem Wasser erfolgen.

Es kann ein Entfernen einer Maske bzw. Hartmaske erfolgen. Es kann HF verwendet werden, z. B. 1% und/oder für 3 min. Es kann ein Spülen mit deionisiertem Wasser erfolgen. Es kann eine Standard-Reinigung 1 erfolgen, wie oben in Schritt 1 beschrieben. Es kann eine Standard-Reinigung 2 erfolgen, wie oben in Schritt 1 beschrieben. Es kann eine Oxidation erfolgen, beispielsweise eine thermische Oxidation, z. B. für 12 min und/oder bei 950 °C und/oder für 5 nm SiO₂.

In einem Schritt 9 kann eine Implantierung eines Source-Kontakts und/oder eines Drain-Kontakts erfolgen. Es kann ein Photoresist aufgetragen werden, etwa AZ 5214E. Dazu kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AZ 5214E verwendet werden, beispielsweise bei 4000 RPM und/oder mit Vorbeschleunigung. Es kann ein Weichbacken (engl.: "softbake") erfolgen, etwa für 1 min und/oder bei 110°C.

Es kann eine Exposition und/oder Belichtung erfolgen, z. B. mit einem SÜSS MA8/BA8 und/oder bei 75 mJ*cm⁻² und/oder in einem Kontaktmodus. Es kann ein Entwickeln erfolgen, etwa unter Verwendung von AZ MIF 326 und/oder für 1 min. Es kann ein Spülen mit deionisiertem Wasser erfolgen. Es kann ein Trocknen mit N₂ erfolgen.

Es kann eine Ionenimplantation erfolgen, beispielsweise p⁺-p-p⁺ FETs, etwa mit Bor und/oder bei 6 keV Energie und/oder mit einer Dosis von 1*10¹⁵ cm⁻² und/oder n⁺-p-n⁺ FETs, etwa mit Arsen und/oder bei 8 keV Energie und/oder mit einer Dosis von 5*10¹⁴ cm⁻².

Es kann ein Reinigen erfolgen, etwa mit Azeton, etwa für 2 bis 10 Stunden oder für 4 bis 8 Stunden oder über Nacht. Es kann ein Reinigen erfolgen, etwa mit Azeton, etwa für 2 min. Es kann ein Spülen bzw. Reinigen erfolgen, etwa mit Isopropanol und/oder für eine Minute. Es kann ein Trocknen mit N₂ erfolgen.

In einem Schritt 10 kann ein Glühen oder Anlassen nach der Ionenimplantation erfolgen, etwa eine schnelle thermische Ausheilung (engl.: rapid thermal annealing, RTA). Es kann eine RCA-Reinigung erfolgen, etwa wie in Schritt 1 beschrieben. Es kann das Glühen oder Anlassen der Dotierstoffe erfolgen. Bei p⁺-p-p⁺ FETs etwa bei 1000°C und/oder für 5 s und/oder in N₂-Atmosphäre. Bei n⁺-p-n⁺ FETs etwa bei 950°C und/oder für 30 s und/oder in N₂-Atmosphäre.

In einem Schritt 11 kann eine Gate-Oxidation erfolgen. Natives Oxid kann entfernt werden, etwa mittels HF, z. B. 1% und/oder für 1 min. Es kann gespült werden, etwa mit entionisiertem Wasser. Es kann ein Trocknen mit N₂ erfolgen. Es kann eine thermische Oxidation erfolgen, etwa für 45 min und/oder bei 850 °C und/oder für 8 nm SiO₂.

In einem Schritt 12 kann ein "Back Gate" (englisch; keine gängige deutsche Übersetzung vorhanden, etwa: "hinteres Tor" oder "hinteres Gate") geöffnet werden und/oder es kann Gateoxid von einem oder mehreren Mesa-Anschlüssen entfernt werden. Es kann ein Photoresist aufgetragen werden, etwa AZ 5214E. Dazu kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AZ 5214E verwendet werden, beispielsweise bei 4000 RPM und/oder mit Vorbeschleunigung. Es kann ein Weichbacken (engl.: "softbake") erfolgen, etwa für 1 min und/oder bei 110°C.

Es kann eine Exposition und/oder Belichtung erfolgen, z. B. mit einem SÜSS MA8/BA8 und/oder bei 75 mJ*cm⁻² und/oder in einem Kontaktmodus. Es kann ein Entwickeln erfolgen, etwa unter Verwendung von AZ MIF 326 und/oder für 1 min. Es kann ein Spülen mit deionisiertem Wasser erfolgen. Es kann ein Trocknen mit N₂ erfolgen. Es kann ein Hartbacken (engl.: "hard bake") erfolgen, etwa für 2 min und/oder bei 120 °C.

Es kann ein Nassätzen erfolgen, etwa ein "Buffered Oxide Etch" (engl., keine gängige deutsche Übersetzung vorhanden, etwa "gepuffertes Oxid-Ätzen"), etwa mit HF:NH₄F im Verhältnis 1:7 und/oder für 2 min und/oder bei Raumtemperatur. Es kann gespült werden, etwa mit entionisiertem Wasser. Es kann ein Trocknen erfolgen, etwa mit N₂.

Es kann eine Maske bzw. Resist-Maske entfernt werden, etwa mit Aceton und/oder für 2 min. Es kann ein Spülen erfolgen, etwa mit Isopropanol und/oder für 1 min. Es kann ein Trocknen erfolgen, etwa mit N₂.

Es kann eine Reinigung mit einer Mischung aus H₂O₂ und H₂SO₄ erfolgen, etwa im Verhältnis 2:1, und/oder für 10 min. Es kann ein Spülen mit deionisiertem Wasser erfolgen. Es kann ein Trocknen erfolgen, etwa mit N₂.

In eine Schritt 13 kann eine Metallisierung eines oder mehrerer Kontakte erfolgen. Es kann ein Photoresist aufgetragen werden, etwa AZ nLof 2020. Dazu kann ein Dehydratationsbacken erfolgen, z. B. bei 180°C und/oder für 5 min. Es kann eine Haftvermittlerbehandlung erfolgen, z. B. kann ein Haftvermittler wie HMDS (Hexamethyldisilazan) ggf. bei 130°C aufgetragen werden. Es kann ein Spin-Coating (Rotationsbeschichtung) erfolgen, bei dem z. B. 4 ml AZ nLof 2020 verwendet werden, beispielsweise bei 4000 RPM und/oder mit Vorbeschleunigung. Es kann ein Weichbacken (engl.: "softbake") erfolgen, etwa für 1 min und/oder bei 110°C. Es kann eine Exposition und/oder Belichtung erfolgen, z. B. mit einem SÜSS MA8/BA8 und/oder bei 40 mJ*cm⁻² und/oder in einem Kontaktmodus. Es kann ein Nach-Belichtungs-Backen (engl.: "post-exposure bake") erfolgen, etwa für 1 min und/oder bei 110 °C. Es kann ein Entwickeln erfolgen, etwa unter Verwendung von AZ MIF 326 und/oder für 45 s. Es kann ein Spülen mit deionisiertem Wasser erfolgen. Es kann ein Trocknen mit N₂ erfolgen.

Natives Oxid kann entfernt werden, etwa mittels HF, z. B. 1% und/oder für 10 s. Es kann gespült werden, etwa mit entionisiertem Wasser.

Es kann eine Metallisierung erfolgen. Es kann ein Sputtern oder Zerstäuben erfolgen, etwa von 5 nm TiN / 200 nm Al-Metallstack. Es kann ein Anheben erfolgen. Dazu kann ein Reinigen erfolgen, etwa mit Azeton, etwa für 2 bis 10 Stunden oder für 4 bis 8 Stunden oder über Nacht. Es kann ein Reinigen erfolgen, etwa mit Azeton, etwa für 2 min. Es kann ein Spülen bzw. Reinigen erfolgen, etwa mit Isopropanol und/oder für eine Minute. Es kann ein Trocknen mit N₂ erfolgen.

Es kann ein Plasmareinigen erfolgen, etwa mit O₂-Plasma und/oder für 3 min. Es kann eine schnelle thermische Ausheilung RTA-Annealing erfolgen, etwa für die metallischen Kontakte, z. B. bei 450°C und/oder für 10 min und/oder in Formiergas-Atmosphäre, etwa mit N₂:H₂ = 5:5.

In einem Schritt 14 kann eine Passivierung erfolgen. Es kann eine Haftvermittlerbehandlung erfolgen, z. B. kann ein Haftvermittler wie VM 652 aufgetragen werden. Es kann ein Dehydratationsbacken erfolgen, z. B. bei 180°C und/oder für 30 min. Es kann ein Spin-Coating (Rotationsbeschichtung) erfolgen, bei dem z. B. 4 ml VM 652 verwendet werden, beispielsweise bei 3000 RPM und/oder mit Vorbeschleunigung. Es kann ein Weichbacken (engl.: "softbake") erfolgen, etwa für 1 min und/oder bei 110°C. Es kann ein Polyimid-Präkursor wie PI 2545 aufgetragen werden. Es kann ein Spin-Coating (Rotationsbeschichtung) erfolgen, bei dem z. B. 10 ml PI 2545 verwendet werden, beispielsweise bei 5000 RPM und/oder mit Vorbeschleunigung. Es kann ein Weichbacken (engl.: "softbake") erfolgen, etwa für 1 min und/oder bei 110°C. Es kann ein Spin-Coating (Rotationsbeschichtung) erfolgen, bei dem z. B. 4 ml AZ nLof 2020 verwendet werden, beispielsweise bei 4000 RPM und/oder mit Vorbeschleunigung. Es kann ein Weichbacken (engl.: "softbake") erfolgen, etwa für 1 min und/oder bei 110°C. Es kann eine Exposition und/oder Belichtung erfolgen, z. B. mit einem SÜSS MA8/BA8 und/oder bei 40 mJ*cm⁻² und/oder in einem Kontaktmodus. Es kann ein Nach-Belichtungs-Backen (engl.: "post-exposure bake") erfolgen, etwa für 1 min und/oder bei 110 °C. Es kann ein Entwickeln erfolgen, etwa unter Verwendung von AZ MIF 326 und/oder für 30 s bis 50 s. Es kann ein Spülen mit deionisiertem Wasser erfolgen. Es kann ein Trocknen mit N₂ erfolgen. Es kann eine Maske bzw. Resist-Maske entfernt werden, etwa mit Aceton und/oder für 2 min. Es kann ein Spülen erfolgen, etwa mit Isopropanol und/oder für 1 min. Es kann ein Trocknen erfolgen, etwa mit N₂. Es kann ein Plasmareinigen erfolgen, etwa mit O₂-Plasma und/oder für 2 min. Es kann ein Hartbacken (engl.: "hard bake") erfolgen, etwa in einem Prozessofen und/oder für 30 min und/oder bei 350 °C und/oder unter N₂-Durchfluss. Es kann ein Abkühlen erfolgen, etwa für 2 bis 10 Stunden oder für 4 bis 8 Stunden oder über Nacht.

In einem Schritt 15 können Nanodraht-FET-Strukturen verpackt werden. Es kann ein Photoresist aufgetragen werden, etwa ein PMMA-Elektronenstrahl-Photoresist, etwa AR 649.04 K. Zu diesem Zweck kann ein Dehydratationsbacken erfolgen, z. B. bei 180°C und/oder für 5 min. Es kann ein Spin-Coating (Rotationsbeschichtung) erfolgen, bei dem z. B. 4 ml AR 649.04 K verwendet werden, beispielsweise bei 4000 RPM und/oder mit Vorbeschleunigung. Es kann ein Weichbacken (engl.: "softbake") erfolgen, etwa für 2 min und/oder bei 110°C.

Es kann ein Schneiden von Wafern erfolgen, etwa mit einer Trennsäge. Es kann ein Reinigen der einzelnen Chips erfolgen, etwa mittels Aceton und/oder Isopropanol. Es kann ein Anordnen der Chips in Boxen erfolgen.

In einem Ausführungsbeispiel erfolgen einige oder sämtliche der oben unabhängig voneinander genannten Schritte 1 bis 15, insbesondere in der angegebenen Reihenfolge. In einem Ausführungsbeispiel erfolgen sämtliche der oben unabhängig voneinander genannten Unterschritte eines oder mehrerer oder aller Schritte 1 bis 15. Werden sämtliche der genannten Schritte ausgeführt, kann dies als Standardverfahren zur reproduzierbaren Herstellung der erfindungsgemäßen Vorrichtung dienen.

Nachfolgend werden weitere Ausführungsbeispiele der Erfindung auch anhand von Figuren näher erläutert.

Es zeigen:
- Figur 1:: einen Biosensor;
- Figur 2:: einen weiteren Biosensor;
- Figuren 3 bis 5:: Schritte zur Herstellung eines Feldeffekttransistors;
- Figuren 6 bis 8:: Mikroskopische Abbildung von Verengungen;
- Figur 9:: eine schematische Darstellung einer Verengung;
- Figur 10:: ein I-V-Diagramm,
- Figur 11:: eine Ausführungsform mit mehreren Verengungen,
- Figur 12:: eine schematische Darstellung einer Verengung im Betrieb,
- Figur 13:: eine schematische Darstellung eines Zwei-Niveau-Signals,
- Figur 14:: Übertragungskurven eines Biosensors, sowie
- Figur 15:: ein Diagramm des Ansprechverhaltens eines Biosensors.

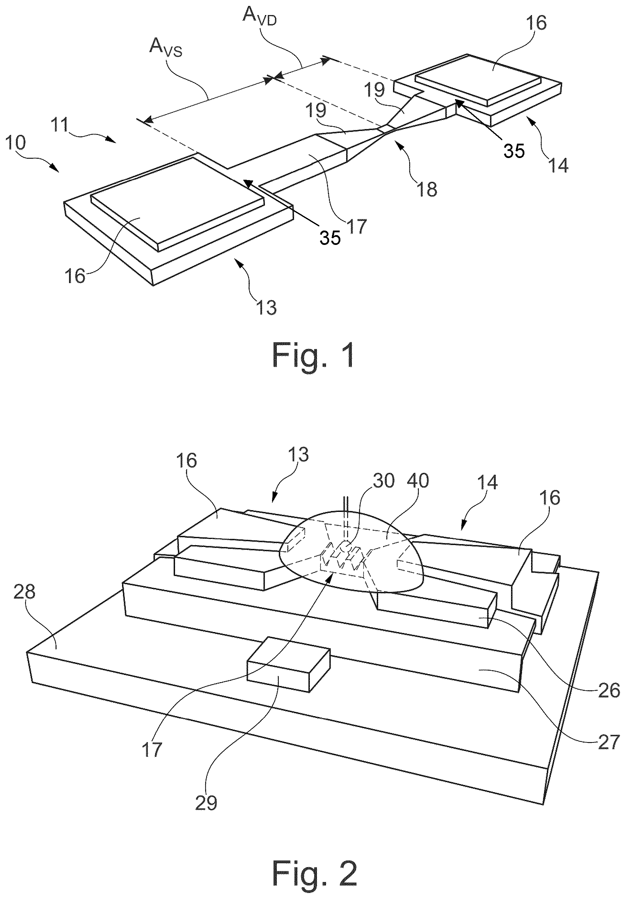

Figur 1 zeigt schematisch einen Biosensor 10 mit einem Feldeffekttransistor 11. Dieser umfasst einen Source 13, einen Drain 14 und eine zwischen Source 13 und Drain 14 angeordnete Leiterstruktur 17 in Form eines Nanodrahts, insbesondere aus Silizium. Die Leiterstruktur 17 weist eine Verengung 18 auf. Auf dem Source 13 und dem Gate 14 befinden sich jeweils ein metallischer Kontakt 16.

Die Verengung 18 umfasst hier beispielhaft zwei schräge Seitenflächen 19, die eine Oberseite einer engsten Stelle auf jeder Seite mit den Oberseiten der benachbarten, nicht verengten Leiterstruktur 17 verbindet. In der Verengung 18 ist die Höhe der Leiterstruktur 17 reduziert. Die geringste Erstreckung von beispielsweise etwa 20 nm oder weniger liegt in der Verengung 18 typischerweise in vertikaler Richtung vor. Die Seitenflächen 19 weisen nach oben. Zudem können eine oder mehrere schräge, seitliche Seitenflächen vorhanden sein. In der Verengung 18 kann die Breite der Leiterstruktur 17 reduziert sein. Schräge, seitliche Seitenflächen können die Seitenflächen der engste Stelle auf jeder Seite mit den seitlichen Oberflächen der benachbarten, nicht verengten Leiterstruktur 17 verbinden.

Die Verengung 18 kann an ihrer engsten Stelle einen Abschnitt mit im Wesentlichen konstanten Querschnitt aufweisen, wie in Figur 1 dargestellt. Alternativ kann die Verengung 18 durch schräge Seitenflächen 19 gebildet sein, die einander kontaktieren.

Es ist ersichtlich, dass die Verengung 18 näher am Drain 14 ist als am Source 13. Mit anderen Worten ist der Abstand A_{VS} zwischen Verengung 18 und Source 13 größer als der Abstand A_{VD} zwischen Verengung 18 und Drain 14.

Zwischen dem Source-Kontakt bzw. dem Drain-Kontakt und der Leiterstruktur kann jeweils optional ein Zwischenstück 35 angeordnet sein. Das Zwischenstück kann aus demselben Material hergestellt sein wie die Leiterstruktur 17. Das Zwischenstück 35 gewährleistet einen vergrößerten Abstand zwischen dem jeweiligen Kontakt. Der Abstand wird entlang der Haupterstreckungsrichtung der Leiterstruktur 17 gemessen. Das Zwischenstück 35 kann so bemessen sein, dass der Abstand wenigstens 0,5 µm, bevorzugt wenigstens 1 µm und/oder höchstens 3 µm, bevorzugt höchstens 2 µm beträgt. Auf diese Weise wird eine Verringerung der Ladungsträgermobilität durch das Herstellen der Kontakte mittels Ionenimplantation und anschließendes Hochtemperaturglühen verhindert.

Figur 2 zeigt eine weitere Ausführungsform eines Biosensors 10. Der Biosensor 10 umfasst ein Substrat 28, insbesondere aus Silizium, auf dem der Feldeffekttransistor 11 und ggf. weitere Teile des Biosensors 10 angeordnet sind. Das Substrat 13 kann z. B. ein undotierter Halbleiter, ein mit einer Oxidschicht passivierter Halbleiter (etwa ein SOI-Substrat) oder ein dielektrisches Substrat sein. Auf dem Substrat 28 befindet im hier gezeigten Beispiel sich eine Schicht aus Buried Oxide 27. Es handelt sich also um einen Silicon-on-Isolator. Insbesondere benachbart dazu ist ein Back Gate 29 angeordnet.

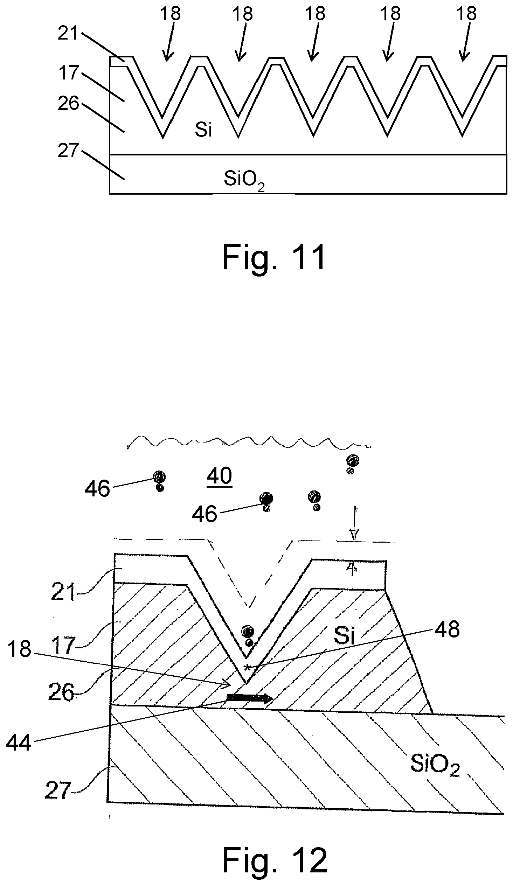

Auf dem Buried Oxide 27 befindet sich eine Schicht 26, insbesondere aus Silizium, die die Leiterstruktur 17 und zumindest Teile von Source 13 und Drain 14 ausbildet. In der Leiterstruktur 17 befinden sich, wie in Bezug zur Figur 1 beschrieben, zumindest eine Verengung. Es können jedoch mehrere insbesondere im Wesentlichen gleichartige Verengungen hintereinander angeordnet sein, wie dies in den Figuren 2 und 11 schematisch dargestellt ist. Die Schicht 26 ist unterschiedlich dotiert, wie durch die Angaben P⁺ und P dargestellt. Mit anderen Worten sind Ionen implantiert, um so gute Transporteigenschaften zu erhalten. Insbesondere handelt es sich um hochimplantierte halbleitende Bereiche, etwa mit Arsen oder Bor. Oberhalb der mit P⁺ für Bor gekennzeichneten, dotierten Halbleiter der Schicht 26 befinden sich die Kontakte 16. Gemeinsam bilden diese Source 13 und Drain 14 aus. In der Schaltung kann der Kontakt des Source 13 geerdet sein und/oder an dem Kontakt des Drain 14 kann eine Spannungsquelle für die Drain-Source-Spannung angeordnet sein. Die Leiterstruktur 17 (siehe "P") ist deutlich geringer implantiert bzw. dotiert als Source und Drain.

Die zu untersuchende Probe 40 mit den zu detektierenden oder zu studierenden Molekülen ist schematisch als Tropfen dargestellt. Der Biosensor 10 umfasst ferner eine Referenzelektrode 30, die die Probe 40 kontaktiert bzw. darin eingetaucht ist oder wird. Das Potential der Proben 40 kann über die Referenzelektrode 30 mit einer Spannung V_{G} versetzt werden. Source 13 und Drain 14 sind typischerweise nach oben oder außen hin durch eine Deckschicht isoliert, beispielsweise mit oder aus Polymer, um einen durch die Probe 40 bedingten Kurzschluss zu verhindern. Mit anderen Worten ist ein isoliertes Reservoir zur Aufnahme der Probe 40 vorhanden.

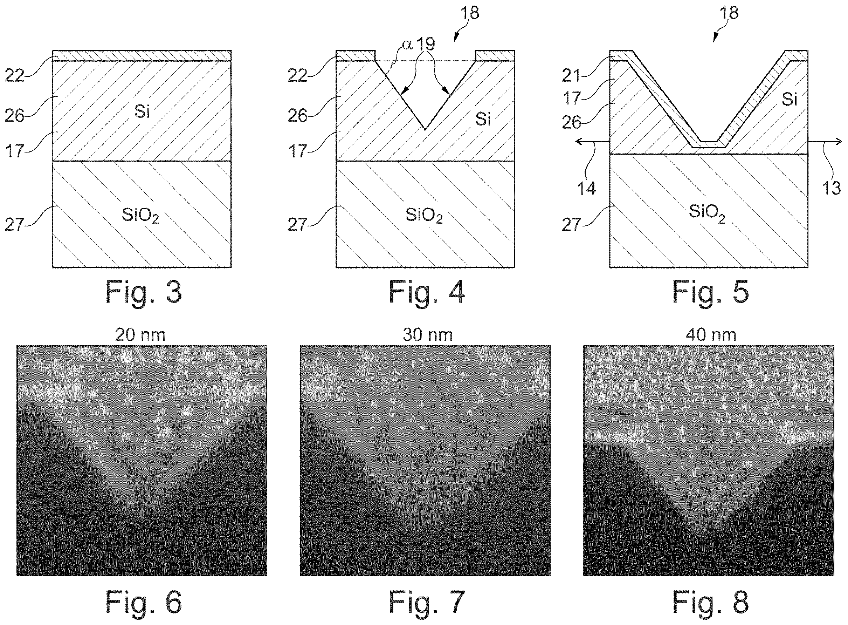

Figur 3 zeigt die Leiterstruktur 17 vor der Herstellung der Verengung. Es ist ein mehrschichtiger Aufbau mit einem Buried Oxide 27 aus SiO₂ vorhanden. Darüber befindet sich eine Schicht 26 aus Silizium. Darüber befindet sich eine Maskierung 22 zum Ätzen der Verengung.

Figur 4 zeigt einen Schritt, bei dem die Verengung 18 durch Ätzen hergestellt wird. Die Maskierung 22 ist unterbrochen, beispielsweise auf einer Länge von ungefähr 50 nm. Wie dargestellt ist das Silizium der Schicht 26 bevorzugt in Si(111)-Richtung 111 ausgerichtet. Auf diese Weise erfolgt aufgrund der Anisotropie des Materials der Materialabtrag beim Ätzen besonders langsam. So kann bei einer sehr dünnen Verengung 18 mit einer Höhe von beispielsweise etwa 20 nm eine besonders hohe Reproduzierbarkeit erreicht werden. Durch das Ätzen bilden sich schräge Seitenflächen 19.

Die Tiefe der Aussparung im Bereich der Verengung 18 ist beispielsweise etwa 35,3 nm. Die verbleibende Dicke des Materials der Schicht 26 im Bereich der Verengung 18 beträgt beispielsweise ca. 10 nm. Der Winkel α zwischen der Horizontalen bzw. der Oberfläche der Leiterstruktur 17 und den Seitenflächen 19 beträgt hier beispielsweise 54,7°. Der Bereich des minimalen Querschnitts hat eine Länge zwischen 10 nm und 20 nm. Die entlang der Haupterstreckungsrichtung der Leiterstruktur gemessene Länge der Verengung inklusive der Seitenflächen 19 kann höchstens 100 nm betragen.

Figur 5 zeigt die fertiggestellte Verengung 18. Auf der Schicht 26, die die Leiterstruktur 17 ausbildet, befindet sich eine dünne Deckschicht 21, beispielswiese aus SiO₂ und/oder Al₂O₃. Die Deckschicht 21 ist insbesondere dünner als 30 nm, beispielsweise zwischen 15 nm und 20 nm.

Die Figuren 6 bis 8 zeigen Bilder eines Rasterelektronenmikroskops, hergestellt mittels eines FEI Magellan, von hergestellten Verengungen 18. Es wurden Parameter variiert, um unterschiedliche Höhen des verbleibenden Materials an der engsten Stelle zu erhalten. In Figur 6 sollten 20 nm Materialstärke verbleiben, in Figur 7 30 nm und in Figur 8 40 nm. Die Tiefe der dreieckigen, geätzten Öffnung beträgt in Figur 6 54 nm, in Figur 7 62 nm und in Figur 8 71 nm. Die Breite der Öffnung in der Maskierung beträgt in Figur 6 68 nm, in Figur 7 82 nm und in Figur 8 98 nm. Auf diese Weise konnten die gewünschten Parameter zur reproduzierbaren Erzeugung einer besonders dünnen Struktur ermittelt und getestet werden. Im Anschluss wurden die optimale Temperatur und Ätzdauer ermittelt, die im gezeigten Beispiel 30°C und 4 min, 21 s betrugen.

Es zeigt sich, dass bei einem Ätzen mit der verwendeten TMAH-Lösung (Tetra-methyl-Ammonium-Hydroxid) besonders glatte Oberflächen erzeugt werden.

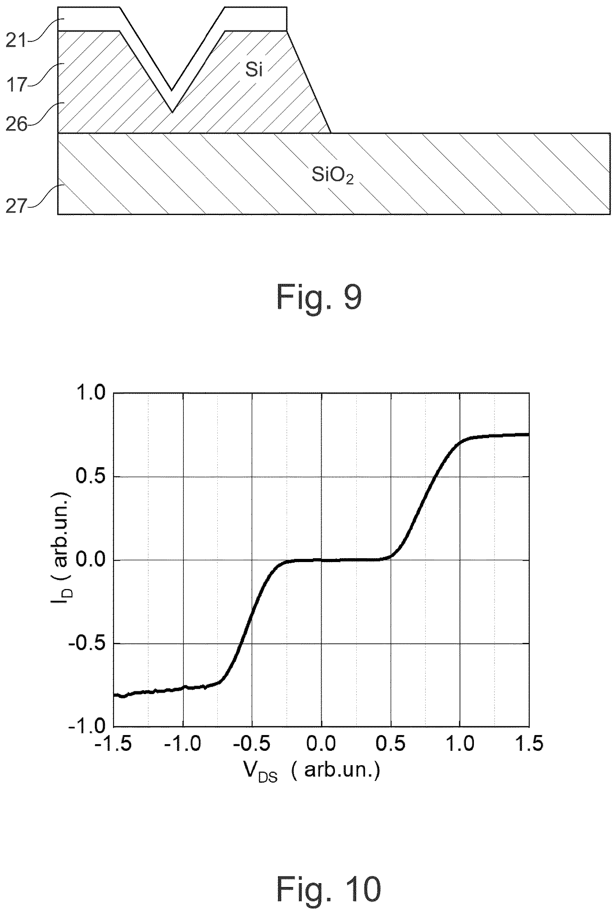

Figur 9 zeigt ermittelte optimale Parameter für eine Silizium-Dicke von 5 nm nach Oxidation, an der engsten Stelle. Es wurde eine Silizium-Schicht mit einer Dicke von 40 nm bis 50 nm hergestellt, beispielsweise ca. 43 nm. Es wurde eine Öffnung mit einer Tiefe von zwischen 35 nm und 45 nm, insbesondere etwa 28 mm, hergestellt. Dies wird in vertikaler Richtung von der Oberseite der Silizium-Schicht 26 bis zur tiefsten Stelle gemessen. Zur Herstellung der Öffnung wurde eine Öffnungsweite der Maskierung von ca. 40 nm bis ca. 50 nm verwendet, insbesondere etwa 45 nm. Das Ätzen erfolgte mit TMAH für 6 Minuten, 13 Sekunden bei einer Ätzrate von etwa 4.5 nm/min.

Figur 10 zeigt die hohe Mobilität der Ladungsträger (Elektronen oder Löcher), gemessen mit Keithley 2400- und Keithley 2430-Messgeräten in einem I-V-Diagramm. Aufgetragen ist der Drainstrom in beliebigen Einheiten ID [arb. un.] über der Drain-Source-Spannung in beliebigen Einheiten V_{DS} [arb. un.]. Es zeigen sich mehrere Stufen, in denen die Kurve zwischenzeitlich sehr steil ansteigt.

Figur 11 zeigt eine Ausgestaltung ähnlich wie Figur 9, allerdings mit mehreren Verengungen 18. Die Verengungen 18 sind hintereinander, insbesondere mit gleichen Abständen zwischen einander, entlang der Länge der Leiterstruktur 17 angeordnet. Beispielhaft sind fünf Verengungen 18 dargestellt, es könnten aber auch zwei, drei, vier, sechs, sieben, acht oder mehr Verengungen 18 sein. In einer Ausführungsform sind zwischen 2 und 10 Verengungen vorhanden. Diese Ausgestaltung hat sich als besonders zielführend zur Lösung der Aufgabe erwiesen. Die Sensitivität des Biosensors kann auf diese Weise weiter gesteigert werden. Ein Abstand zwischen zwei Verengungen kann wenigstens 20 nm und/oder höchstens 80 nm betragen. Der Abstand wird entlang der Längserstreckung der Leiterstruktur gemessen. Über der Leiterstruktur mit den Verengungen befindet sich die Deckschicht 21. Es können mehrere Vorrichtungen bzw. Feldeffekttransistoren kombiniert werden, um viele Verengungen zu erhalten.

Figur 12 zeigt eine schematische Darstellung einer Verengung 18 in einer ähnlichen Darstellung wie in Figur 9. Es ist ferner eine biochemische Flüssigkeit 40 dargestellt, in der sich geladene Teilchen 46 bzw. Träger befinden, beispielsweise geladene Moleküle. Die Flüssigkeit kann beispielsweise MgCl₂-Lösung sein oder enthalten.

Im Bereich der Verengung 18 ist mit einem Pfeil der sich einstellende Kanalstrom 44 eingezeichnet. Insbesondere stellt sich aufgrund des verengten und/oder V-förmigen Kanals ein Überfüllungseffekt mit einer erhöhten Stromdichte ein. Es wird ein effektiver Austausch mit der oder den Anlagestelle(n) ermöglicht. Im Falle einer V-förmigen Verengung 18 wird eine einzelne Anlagestelle 48, die als Stern dargestellt ist, für ein einziges geladenes Teilchen 46 bereitgestellt.

Zudem sind, die sich in der biochemischen Flüssigkeit 40 befinden. Darüber hinaus ist oberhalb der Deckschicht 21 die Debye-Länge λ_{D} dargestellt. Die Debye-Länge oder Abschirmlänge λ_{D} ist die charakteristische Länge, auf welcher das elektrische Potential einer lokalen Überschussladung auf das -fache abfällt. Es zeigt sich, dass die Debye-Länge λ_{D} im Bereich der Verengung 18 insbesondere verdoppelt ist. Im Bereich der Verengung 18 hat sich ein geladener Träger 44 angelagert.

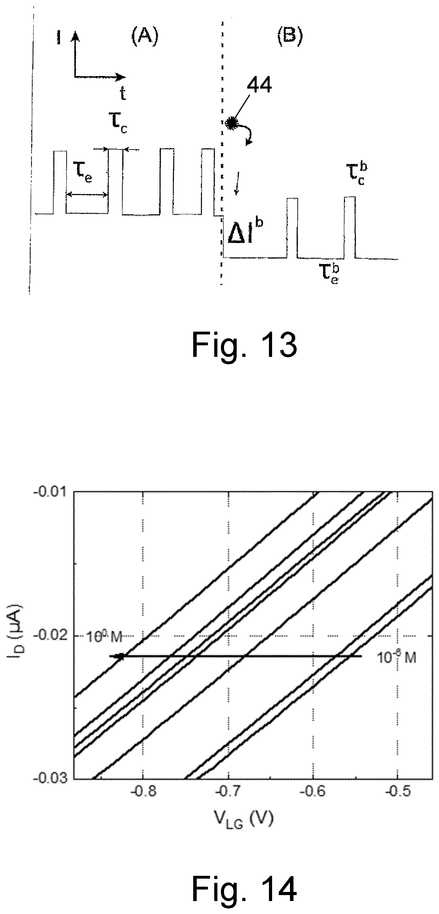

In einer Ausführungsform ist der Biosensor so eingerichtet und/oder die Verengung ist so ausgestaltet, dass ein Zwei-Level-Signal erzeugt werden kann (auch als Zwei-Niveau-Signal bezeichnet). Dies kann durch die Verengung 18 ermöglicht werden. Die Konformationsänderung eines geladenen Trägers 46 bzw. Moleküls angekoppelt an die Verengung kann zu einem Modulationseffekt und/oder zu einem Ladungsumschaltvorgang führen, sodass in der Folge ein Zwei-Level-Signal erzeugt wird. Das zwei-Level-Signal kann sich infolge der Einfang-Emission zur/ von der Anlagestelle 48 einstellen. Figur 13 zeigt schematisch ein Zwei-Level-Signal (TLS) vor (A) und nach (B) der Anlagerung eines oder mehrerer geladener Träger an die dielektrische Schicht, die schematisch mit einem geladenen Träger 44 dargestellt ist. A wurde vor dem Einbringen von Ionen und/oder Molekülen in die Lösung ermittelt und B nach dem Einbringen von Ionen und/oder Molekülen in die Lösung. Aufgetragen ist jeweils der Strom I über die Zeit t. Das Niveau des Stroms I wird durch die Anlagerung verringert, und zwar sowohl im oberen Bereich, dessen Länge dargestellt ist als τ_{c} bzw. τ_{c}^{b}, als auch im unteren Bereich, dessen Länge dargestellt ist als τₑ bzw. τₑ^{b}. diese Veränderung wird als ΔI^{b} bezeichnet.

Figur 14 zeigt typische Übertragungskurven eines Biosensors mit V-förmiger Verengung, auch als Nano-FET bezeichnet. Diese wurde gemessen bei einer kleinen Drain-Source-Spannung V_{DS} = -0.1 V in MgCl₂-Lösung in Konzentrationsbereichen von 10⁻⁶M bis 10⁰M. Aufgetragen ist jeweils der Drain-Strom I_{D} in µA über die Flüssig-Gate-Spannung V_{LG} (engl.: Liquid-Gate Voltage) in V. die Konzentrationen der Lösung sind eingezeichnet.

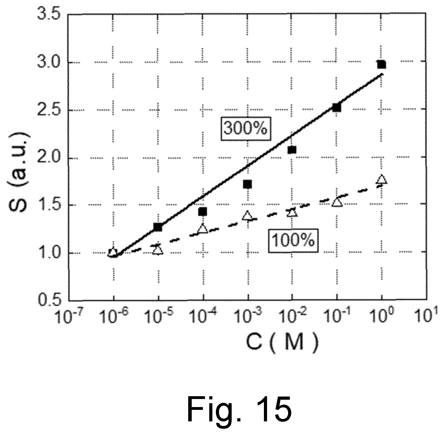

Figur 15 zeigt das Ansprechverhalten eines Biosensors basierend auf unterschiedlichen Ansätzen. Aufgetragen ist jeweils die Sensitivität S in beliebigen Einheiten S (a. u.) über die Konzentration in Mol, d. h. C(M).

Dargestellt ist ein Vergleich des Ansprechens des Biosensors als Empfindlichkeit, berechnet für den Standardansatz, unter Verwendung der Drainstromverschiebung und der neuen, auf dem Zwei-Niveau-Signal basierenden Ansätze. Die Linien stellen lineare Anpassungen der Daten dar und spiegeln eine 300%ige Verstärkung wider, die unter Verwendung der normierten charakteristischen Zeitkonstante τ, die für die Lösung verschiedener Konzentrationen extrahiert wurde, gegenüber der charakteristischen Anfangszeitkonstante τ₀ , erhalten wurde (d. h. τ/τ₀), verglichen mit einer 100%igen Steigung, die unter Verwendung der normierten Drainstromverschiebung, I, die für die Lösung verschiedener Konzentrationen extrahiert wurde, gegenüber dem Anfangsdrainstrom, I₀ (d. h. I₀/I).

Grundsätzlich kann Nano-FET zur Erkennung von Konformationsänderungen von Molekülen auch ohne Anlagestelle verwendet werden, also ohne Anlagestelle für ein einzelnes geladenes Teilchen (also ohne Einzelfalle oder Englisch "single trap"), da der Abstand zwischen dem geladenen Zustand eines Moleküls im ersten Konformationszustand vom Abstand zwischen dem geladenen Zustand eines Moleküls im zweiten Konformationszustand abweicht. Der Drainstrom moduliert in Form von Zwei-Niveau-Signal, das durch den periodischen Wechsel vom ersten Konformationszustand zum zweiten Konformationszustand und zurück entsteht.

Der erfindungsgemäße Biosensor ist bevorzugt geeignet, dynamische Prozesse einer biologischen Flüssigkeit direkt und/oder auf molekular Ebene zu analysieren.

Die Spannung bzw. das Potential aus der oder den Zeitkonstanten des fließenden Stroms kann an Stelle des bislang verwendeten Zeitmittelwerts des Drain-Stroms mit einem Telegraph-Modulationssignal und dessen charakteristischen Zeitkonstanten als Messignal für Potential bzw. Spannung der Probe genutzt werden. Dadurch wird die Empfindlichkeit and Genauigkeit der Messung deutlich verbessert.

Es hat sich gezeigt, dass die speziell entwickelte, erfindungsgemäße Biosensor-Geometrie mit einer Verengung die Verstärkung der Empfindlichkeit von Biosensoren gewährleistet, insbesondere durch Einfang-Emission.

**Bezugszeichenliste**

| | |
|---|---|
| Biosensor | 10 |
| Feldeffekttransistor | 11 |
| Source | 13 |
| Drain | 14 |
| Kontakt | 16 |
| Leiterstruktur | 17 |
| Verengung | 18 |
| Seitenfläche | 19 |
| Schicht | 20 |
| Deckschicht | 21 |
| Maskierung | 22 |
| Schicht | 26 |
| Buried Oxide | 27 |
| Substrat | 28 |
| Back Gate | 29 |
| Referenzelektrode | 30 |
| Zwischenstück | 35 |
| Flüssigkeit | 40 |
| Kanalstrom | 44 |
| Geladenes Teilchen | 46 |
| Anlagestelle | 48 |
| Si(111)-Richtung | 111 |
| Abstand (Verengung-Drain) | A_{VD} |
| Abstand (Verengung-Source) | A_{VS} |
| Winkel | α |
| Drain-Source-Spannung [bel. Einheiten] | V_{DS} [arb. un.] |
| Drainstrom [bel. Einheiten] | I_{D} [arb. un.] |
| Strom | I |
| Zeit | t |
| Länge des oberen Bereichs | τ_{c}, τ_{c}^{b} |
| Länge des unteren Bereichs | τₑ, τₑ^{b} |
| Veränderung | ΔI^{b} |
| Drainstrom | I_{D} (µA) |
| Flüssig-Gate-Spannung [V] | V_{LG} (V). |
| Sensitivität [bel. Einheiten] | S (a. u.) |
| Konzentration [M] | C(M) |

## Patentansprüche

1. Biosensor (10), umfassend einen Feldeffekttransistor (11) mit Source (13) und Drain (14), wobei der Feldeffekttransistor (11) eine Leiterstruktur (17) aufweist, **dadurch gekennzeichnet, dass** die Leiterstruktur (17) eine Verengung (18) aufweist.

2. Biosensor (10) nach dem vorhergehenden Anspruch, **dadurch gekennzeichnet, dass** die Verengung (18) an einer schmalsten Stelle eine Erstreckung von höchstens 30 nm, insbesondere höchstens 20 nm, aufweist.

3. Biosensor (10) nach einem der vorhergehenden Ansprüche, **dadurch gekennzeichnet, dass** die Verengung (18) durch schräge Seitenflächen (19) gebildet ist,
wobei jede der Seitenflächen (19) insbesondere einen Winkel α von mindestens 40°, bevorzugt mindestens 50° und/oder höchstens 70°, bevorzugt höchstens 60°, mit einer Oberfläche der der Verengung (18) benachbarten Leiterstruktur (17) einschließt.

4. Biosensor (10) nach einem der vorhergehenden Ansprüche, **dadurch gekennzeichnet, dass** die Verengung (18) im Querschnitt V-förmig ist.

5. Biosensor (10) nach einem der vorhergehenden Ansprüche, **dadurch gekennzeichnet, dass** ein Abstand (A_{VD}) zwischen der Verengung (18) und dem Drain (14) geringer ist als ein Abstand (A_{VS}) zwischen der Verengung (18) und dem Source (13).

6. Biosensor (10) nach einem der vorhergehenden Ansprüche, **dadurch gekennzeichnet, dass** ein Abstand (A_{VS}) zwischen der Verengung (18) und dem Source (13) kleiner ist als 150 nm und/oder dass ein Abstand (A_{VD}) zwischen der Verengung (18) und dem Drain (14) kleiner ist als 30 nm.

7. Biosensor (10) nach einem der vorhergehenden Ansprüche, **dadurch gekennzeichnet, dass** die Leiterstruktur (17) Silizium umfasst oder aus Silizium hergestellt ist und/oder dass der Feldeffekttransistor (11) als Silicon-on-Insulator ausgestaltet ist.

8. Biosensor (10) nach einem der vorhergehenden Ansprüche, **dadurch gekennzeichnet, dass** die Leiterstruktur (17) mit SiO₂ und/oder Al₂O₃ bedeckt ist.

9. Biosensor (10) nach einem der vorhergehenden Ansprüche, **dadurch gekennzeichnet, dass** der Source (13) und/oder der Drain (14) mit einer elektrisch isolierenden Schicht (20) bedeckt ist.

10. Biosensor (10) nach einem der vorhergehenden Ansprüche, **dadurch gekennzeichnet, dass** entlang der Länge der Leiterstruktur (17) mehrere Verengungen (18) hintereinander angeordnet sind.

11. Biosensor (10) nach einem der vorhergehenden Ansprüche, wobei die Verengung (18) so ausgestaltet ist, dass ein Zwei-Level-Signal erzeugt werden kann.

12. Verfahren zum Herstellen eines Feldeffekttransistors (11) für einen Biosensor (10) gemäß einem der vorhergehenden Ansprüche, umfassend:
- Bereitstellen einer Leiterstruktur (17), insbesondere eines Nanodrahts,
- Herstellung einer Verengung (18) in der Leiterstruktur (17).

13. Verfahren nach dem vorhergehenden Anspruch, **dadurch gekennzeichnet, dass** zur Herstellung der Verengung (18) mindestens ein Ätzverfahren durchgeführt wird, insbesondere nasschemisches Ätzen und/oder Trockenätzen.

14. Verfahren nach einem der zwei vorhergehenden Ansprüche, ferner umfassend Auftragen einer Deckschicht (21), die Al₂O₃ umfasst, insbesondere mittels Atomlagenabscheidung.

15. Verfahren nach einem der drei vorhergehenden Ansprüche, ferner umfassend Herstellen von ohmschen Kontakten (16) und insbesondere Passivierung der ohmschen Kontakte (16).
